# EUROPÄISCHE PATENTANMELDUNG

(11) **EP 3 522 510 A1**
(43) Veröffentlichungstag der Anmeldung: **07.08.2019**
(21) Anmeldenummer: 18154632.6
(22) Anmeldetag: 01.02.2018
(51) Int. Cl.: H04M 11/02

(54) **GEGENSPRECHANLAGE FÜR EIN GEBÄUDE ODER EINEN GEBÄUDEKOMPLEX AUS MEHREREN GEBÄUDEN UND EIN ENTSPRECHENDES VERFAHREN**

(71) Anmelder: GIRA GIERSIEPEN GmbH & Co. KG, 42477 Radevormwald (DE)
(72) Erfinder: Kobold, Andreas, 50670 Köln (DE); Schimmelpfennig, Frank, 42477 Radevormwald (DE)
(74) Vertreter: Angerhausen, Christoph

(57) **Zusammenfassung**

Die Erfindung betrifft eine Gegensprechanlage für ein Gebäude oder einen Gebäudekomplex aus mehreren Gebäuden, mit einer Türeinheit (1) und einer Mehrzahl Wohnungseinheiten (2), dadurch gekennzeichnet, dass die Türeinheit (1) sprachaktivierbar und die Gegensprechanlage dazu eingerichtet ist, in einem aktivierten Zustand der Türeinheit (1) infolge mindestens eines Sprachbefehls oder eines Tastbefehls eine Sprachverbindung zwischen der Türeinheit (1) und einer der Wohnungseinheiten (2) aufzubauen. Es wird weiterhin ein entsprechendes Verfahren für den Aufbau einer Sprechverbindung zwischen einer Türeinheit und einer bestimmten Wohnungseinheit beschrieben.

## Beschreibung

Die Erfindung geht aus von einer Gegensprechanlage für ein Gebäude, mit einer Türeinheit und einer Mehrzahl Wohnungseinheiten. Eine derartige Anlage ist aus der EP 1 320 244 B2 und aus der DE 102 533 08 B4 bekannt.

Die aus dem Stand der Technik bekannten Gegensprechanlagen haben den Nachteil, dass sie umständlich und wenig intuitiv in der Handhabung sind. Häufig ist es erforderlich, in einem ersten Schritt die Türeinheit zu aktivieren, wozu beispielsweise eine entsprechende Taste der Türeinheit betätigt werden muss. Im Folgenden müssen weitere Bedienelemente der Türeinheit betätigt werden, um die gewünschte Wohnungseinheit beziehungsweise Geschäftseinheit, zu der eine Sprachverbindung aufgebaut werden soll, auszuwählen und den Verbindungsaufbau auszulösen.

Es ist daher die Aufgabe der Erfindung, eine Gegensprechanlage der eingangs beschriebenen Art derart weiterzuentwickeln, dass sie einfach in der Handhabung ist.

Eine derartige Gegensprechanlage ist Gegenstand des Patentanspruchs 1. Der nebengeordnete Patentanspruch 11 betrifft ein entsprechendes Verfahren für den Aufbau einer Sprechverbindung. Vorteilhafte Ausführungsformen sind jeweils Gegenstand der abhängigen Ansprüche.

Demgemäß ist vorgesehen, dass die Türeinheit sprachaktivierbar und die Gegensprechanlage dazu eingerichtet ist, in einem aktivierten Zustand der Türeinheit in Folge mindestens eines Sprachbefehls oder eines Tastbefehls eine Sprachverbindung zwischen der Türeinheit und einer der Wohnungseinheiten aufzubauen.

Für die Bedienung der Gegensprechanlage kann es daher ausreichend sein, dass sich ein Benutzer der Türeinheit nähert und durch Aussprechen eines Sprachbefehls zur Aktivierung der Türeinheit die Türeinheit aktiviert. Es ist weiterhin denkbar, dass nach erfolgter Aktivierung der Türeinheit eine optische oder akustische Bedienungsanleitung durch die Türeinheit ausgegeben wird, mit Hilfe welcher ein Bediener angeleitet wird, die von ihm gewünschte Wohnungseinheit auszuwählen, um einen Sprachaufbau zwischen der Türeinheit und der ausgewählten Wohnungseinheit zu initiieren. Die Auswahl der gewünschten Wohnungseinheit kann durch einen Sprachbefehl erfolgen oder durch einen Tastbefehl, beispielsweise indem nach erfolgter Aktivierung der Türeinheit auf einer optischen Anzeige der Türeinheit ein Auswahlmenü der Wohnungseinheiten der Gegensprechanalage angezeigt wird. Wenn die optische Anzeige berührungssensitiv ausgebildet ist, kann der Benutzer durch einen Tastbefehl die gewünschte Wohnungseinheit auswählen. Es ist ebenso denkbar, dass der Benutzer nach erfolgter Anzeige der auswählbaren Wohnungseinheiten auf der optischen Anzeige durch einen Sprachbefehl die gewünschte Wohnungseinheit auswählt.

Bei großen Immobilien oder Liegenschaften mit mehreren Gebäuden ist es insbesondere denkbar, dass die Auswahl der gewünschten Wohnungseinheit zwischen welcher und der Türeinheit ein Sprachaufbau initiiert werden soll, mehrstufig ausgebildet ist. Beispielsweise können infolge eines ersten Sprachbefehls "erste Etage" oder "Gebäude 1" sämtliche verfügbaren Wohnungseinheiten der ausgewählten ersten Etage des Gebäudes angezeigt werden, so dass ein Benutzer mit Hilfe eines zweiten Sprachbefehls aus der Liste der angezeigten Wohnungseinheiten der ersten Etage diejenige Wohnungseinheit auswählen kann, zu welcher der Sprachaufbau hergestellt werden soll. Auf einer optischen Anzeige der Türeinheit können die auswählbaren Wohnungseinheiten mit Hilfe eines eindeutigen Identifikators unterschieden werden. Dieser kann beispielsweise bei durchnummerierten Wohnungseinheiten die Nummer der Wohnungseinheit sein, oder ein Name der die Wohnungseinheit bewohnenden Person oder des in der Wohnungseinheit ansässigen Unternehmens. Größere Liegenschaften können aus mehreren Gebäuden bestehen, wobei der Zugang zur Liegenschaft zentralisiert sein kann. In diesem Fall könnte es passieren, dass sowohl der Identifikator "Name" als auch der Identifikator "Wohnungsnummer" doppelt vergeben ist. In diesem Fall kann es sinnvoll sein, zuerst, gegebenenfalls per "Sprachwahl", das Gebäude und dann die sich darin befindende Wohneinheit, zu der die Sprachverbindung aufgebaut werden soll, auszuwählen.

Die Türeinheit kann über einen ersten Sprachbefehl aktivierbar und die Gegensprechanlage dazu eingerichtet sein, über mindestens einen zweiten Sprachbefehl, der sich von dem ersten Sprachbefehl unterscheidet, die Sprachverbindung zwischen der Türeinheit und der Wohnungseinheit aufzubauen.

Der Sprachbefehl kann für die Aktivierung der Türeinheit der mindestens eine Sprachbefehl für den Aufbau der Sprachverbindung zwischen der Tür- und der Wohnungseinheit sein.

Der Sprachbefehl für den Aufbau der Sprachverbindung kann mindestens einen Identifikator eines Gebäudes und/oder einer bestimmten Wohnungseinheit des Gebäudes aufweisen, insbesondere eine Gebäudekennung, eine Wohnungsnummer oder den Namen eines Bewohners der Wohnungseinheit oder eines in der Wohnungseinheit ansässigen Unternehmens.

Die Gegensprechanlage kann einen Speicher, in dem mindestens ein Schlüsselwort hinterlegt ist, und eine Spracherkennungseinheit aufweisen, wobei die Türeinheit ein Mikrofon aufweist und die Spracherkennungseinheit dazu eingerichtet ist, einen empfangenen Aktivierungsbefehl auf eine Übereinstimmung mit dem Schlüsselwort zu überprüfen und die Türeinheit nur dann in den aktivierten Zustand zu überführen, wenn die Überprüfung die Übereinstimmung ergeben hat. Der Speicher und/oder die Spracherkennungseinheit können beispielsweise Bestandteil der Türeinheit sein. Sie können jedoch auch webbasiert oder in Verbindung mit einem Gebäudenetzwerk realisiert sein, auf das die Gegensprechanalage über eine Datenschnittstelle zugreifen kann.

Das Mikrofon kann für das Beamforming ausgelegt sein, wobei die Spracherkennungseinheit dazu eingerichtet ist, die Türeinheit nur dann in den aktivierten Zustand zu überführen, wenn der Aktivierungsbefehl bis zu einem bestimmten Maximalabstand zu der Türeinheit und/oder in einem bestimmten Winkelbereich im Verhältnis zu einer Vorderseite der Türeinheit empfangen worden ist. Der bestimmte Winkelbereich kann beispielsweise 45° um das senkrechte Lot zur Vorderseite der Türeinheit betragen.

Die Türeinheit kann eine akustische Ausgabe aufweisen und dazu eingerichtet sein, über die akustische Ausgabe eine Sprachausgabe bereitzustellen, wobei die Sprachausgabe eine Instruktion zur Abgabe des mindestens einen Sprachbefehls oder Tastbefehls und/oder eine akustische Betriebsanleitung der Gegensprechanlage aufweist.

Die Sprachausgabe kann eine Aufforderung zur Nennung eines Schlüsselworts aufweisen, wobei die Türstation dazu eingerichtet ist, den aktivierten Zustand für den Aufbau einer Sprachverbindung zwischen der Türeinheit und einer der Wohnungseinheiten infolge des mindestens einen Sprachbefehls nur dann einzunehmen, wenn die Türeinheit das Schlüsselwort über ein Mikrofon empfängt.

Die Türeinheit kann eine sprachaktivierbare optische Anzeige, insbesondere ein Display, insbesondere ein berühungssensitives Display, aufweisen, wobei in einem aktivierten Zustand der Türeinheit auf der Anzeige ein Verzeichnis der Wohnungseinheiten wiedergegeben ist oder eine Teilmenge der Wohnungseinheiten des Gebäudes, wobei auf der Anzeige jeder der angezeigten Wohnungseinheiten mindestens ein eindeutiger Identifikator, beispielsweise ein Name und/oder eine Nummer zugeordnet ist.

Der mindestens eine eindeutige Identifikator kann auch eine Kombination aus einem Namen und einer Nummer aufweisen, die jeweils eine eindeutige Zuordnung zu einer bestimmten Wohnungseinheit zulassen, so dass es dem Besucher freigestellt ist, ob er den Namen oder die Nummer zur Initiierung einer Sprachverbindung spricht.

Die Türeinheit kann dazu eingerichtet sein, eine Aufforderung zur Auswahl einer der Wohnungseinheiten durch Nennung des eindeutigen Identifikators über eine optische Anzeige oder eine akustische Ausgabe auszugeben.

Gemäß einem anderen Aspekt wird ein Verfahren für den Aufbau einer Sprechverbindung zwischen einer Türeinheit und einer bestimmten Wohnungseinheit einer Mehrzahl Wohnungseinheiten beschrieben, wobei das Verfahren die Schritte aufweist:
- Sprachaktivieren einer Türeinheit einer Gegensprechanlage, die weiterhin eine Mehrzahl Wohnungseinheiten aufweist, woraufhin die Türeinheit einen aktivierten Zustand einnimmt, in welchem sie einen Sprachbefehl für die Auswahl einer der Wohnungseinheiten empfangen kann,
- Aufbauen einer Sprachverbindung zwischen der Türeinheit und einer bestimmten Wohnungseinheit der Mehrzahl Wohnungseinheiten infolge mindestens eines Sprachbefehls.

Die Türeinheit kann vor dem Sprachaktivieren eine optische und/oder akustische Ausgabe über ein Display oder einen Lautsprecher bereitstellen, die eine Instruktion zur Abgabe des mindestens einen Sprachbefehls und/oder eine Betriebsanleitung der Gegensprechanlage aufweist.

Das Bereitstellen einer optischen und/oder akustischen Ausgabe kann eine Aufforderung zur Nennung eines Schlüsselworts aufweisen, wobei die Türeinheit den aktivierten Zustand für den Aufbau einer Sprachverbindung zwischen der Türeinheit und einer der Wohnungseinheiten infolge des mindestens einen Sprachbefehls nur dann einnimmt, wenn die Türeinheit das Schlüsselwort über ein Mikrofon empfängt.

Alternativ kann zur Autorisierung auch vorgesehen sein, dass nach dem Einnehmen des aktivierten Zustands und nach der Abgabe des mindestens eines Sprachbefehls, der den mindestens einen Identifikator aufweist, jedoch vor dem Aufbauen einer Sprachverbindung eine optische oder akustische Aufforderung von der Türstation erzeugt wird, ein für den Rufaufbau mit der adressierten Wohnungseinheit festgelegtes Schlüsselwort in das Mikrofon der Türstation zu sprechen.

Die Türeinheit kann nach dem Einnehmen des aktivierten Zustandes eine optische oder akustische Ausgabe erzeugen, die eine Aufforderungsmitteilung zur Abgabe eines Sprachbefehls aufweist, insbesondere eine Aufforderung zum Auswählen einer der Wohnungseinheiten, mit der eine Sprachverbindung hergestellt werden soll.

Nach dem Erzeugen der optischen oder akustischen Ausgabe kann das Auswählen der bestimmten Wohnungseinheit, mit der eine Sprachverbindung hergestellt werden soll, durch Berühren eines die bestimmte Wohnungseinheit kennzeichnenden Identifikators auf einer Anzeige der Türeinheit oder durch Aussprechen des die bestimmte Wohnungseinheit kennzeichnenden Identifikators erfolgen.

Weitere Einzelheiten der Erfindung werden anhand der nachstehenden Figuren erläutert. Dabei zeigt:
- Figur 1: in schematischer Darstellung eine Ausführungsform einer erfindungsgemäßen Gegensprechanlage; und
- Figur 2: ein Blockdiagramm zur Veranschaulichung eines erfindungsgemäßen Verfahrens für den Aufbau einer Sprechverbindung zwischen einer Türeinheit und einer bestimmten Wohnungseinheit der Gegensprechanlage.

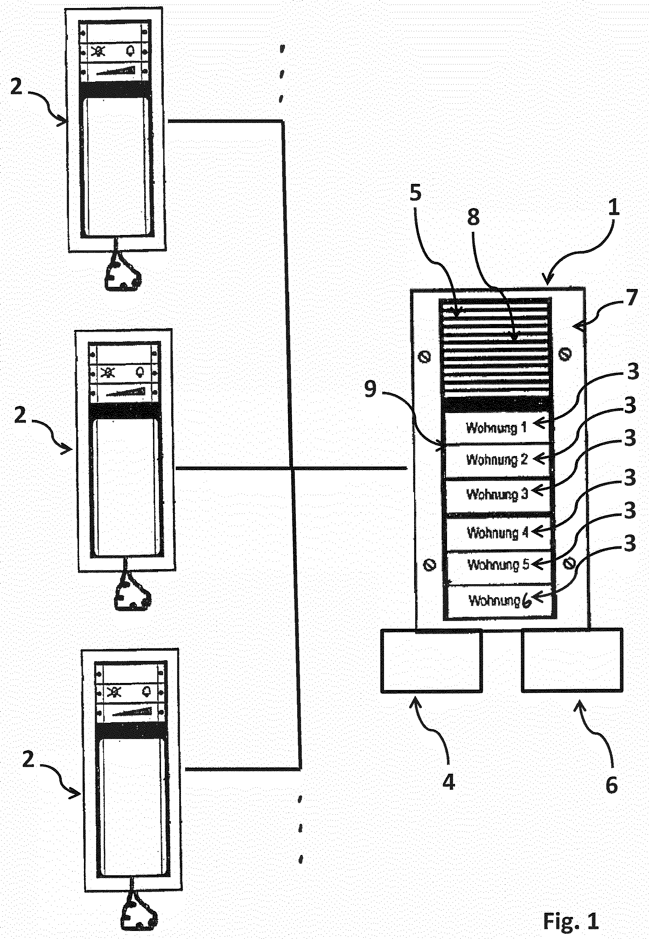

Die Figur 1 zeigt in schematischer Darstellung eine Ausführungsform einer erfindungsgemäßen Gegensprechanlage, die eine Türeinheit 1 und eine Mehrzahl Wohnungseinheiten 2 aufweist. Der einfachen Darstellbarkeit wegen sind lediglich drei Wohnungseinheiten 2 gezeigt, wobei es das erfindungsgemäße Konzept gerade erlaubt, Gegensprechanlagen der erfindungsgemäßen Art zu realisieren, die über eine Vielzahl Wohnungseinheiten 2 verfügen, beispielsweise Gegensprechanlagen für große Mehrfamilienhäuser mit mehr als einhundert Wohnungseinheiten.

Die Türeinheit 1 zeichnet sich dadurch aus, dass sie sprachaktivierbar ist, zu welchem Zwecke beispielsweise auf der Anzeige 9 eine Information für einen sich der Türeinheit 1 nähernden Benutzer angezeigt werden kann, die ihn auffordert, durch einen Sprachbefehl die Türeinheit 1 zu aktivieren. Dies kann beispielsweise die Aufforderung zur Nennung eines Schlüsselworts oder Schlüsselsatzes sein.

Zudem kann die Türeinheit 1 grundsätzlich in einem Standby-Modus betrieben werden, wenn sie nicht gerade für den Aufbau einer Sprachverbindung zu einer der Wohnungseinheiten 2 verwendet wird. Für die Aktivierung kann es beispielsweise erforderlich sein, dass der vor der Türeinheit 1 stehende Benutzer ein Schlüsselwort in das Mikrofon 5 hineinspricht, beispielsweise "Türeinheit aktivieren". Über die Anzeige 9 kann der Benutzer jedoch auch aufgefordert werden, ein Codewort zu nennen, wobei die Türeinheit 1 für den Aufbau einer Sprachverbindung nur dann aktiviert wird, wenn der Benutzer das korrekte Codewort in das Mikrofon 5 spricht.

Nach der Sprachaktivierung der Türeinheit 1 kann auf der Anzeige 9 eine Auswahl von die einzelnen Wohnungseinheiten 2 des Gebäudes identifizierenden Identifikatoren 3 wiedergegeben werden. Die Identifikatoren 3 können beispielsweise die Namen der Bewohner der Wohnungseinheiten 2 sein oder, wie in Figur 1 dargestellt, eine Durchnummerierung der einzelnen Wohnungseinheiten.

Es ist vorgesehen, dass in dem aktivierten Zustand der Türeinheit eine Sprachverbindung zwischen der Türeinheit 1 und einer der Wohnungseinheiten 2 in Folge mindestens eines Sprachbefehls oder eines Tastbefehls aufgebaut wird. Dazu kann der Benutzer den der gewünschten Wohnungseinheit 2 zugeordneten Identifikator 3 in das Mikrofon 5 der Türeinheit 1 sprechen. Alternativ oder zusätzlich kann vorgesehen sein, dass die Anzeige 9 berühungssensitiv ausgebildet ist, so dass die Auswahl der Wohnungseinheit 2 durch Berühren des entsprechenden Identifikators 3 möglich ist.

Es kann auch sinnvoll sein, mehrere Identifikatoren 3 anzuzeigen, z.B. einen Namen und eine zugeordnete Nummer. Es kann sein, dass der Besucher die korrekte Aussprache des Namens nicht kennt. In diesem Fall könnte durch Sprechen der zugeordneten Nummer trotzdem und einfach eine Sprachverbindung aufgebaut werden. Die Nummer muss dabei nicht zwingend eine Wohnungsnummer sein, sie kann dynamisch dem Namen zugeordnet werden und gegebenenfalls zeitabhängig geändert werden.

Mit Hilfe der Anzeige 9 und/oder mit Hilfe der akustischen Ausgabe 8 der Türeinheit 1 kann ein Dialog mit dem Benutzer hergestellt werden, über den der Benutzer durch den Bedienungsprozess der Gegensprechanlage geführt wird.

Die Türeinheit 1 weist einen Speicher 4 auf oder hat Zugriff auf einen externen Speicher. In dem Speicher 4 kann beispielsweise das zur Aktivierung der Türeinheit erforderliche Schlüsselwort hinterlegt sein, sofern ein solches vorgesehen ist. Im Übrigen kann in dem Speicher 4 ein Verzeichnis der Wohnungseinheiten und der den Wohnungseinheiten 2 zugeordneten Identifikatoren 3 abgelegt sein. Die Türeinheit 1 weist weiterhin eine Spracherkennungseinheit 6 auf oder hat Zugriff auf eine externe Spracherkennungseinheit. Die Spracherkennungseinheit 6 kann beispielsweise dazu eingerichtet sein, das in das Mikrofon 5 der Türeinheit 1 gesprochene Wort mit dem in dem Speicher 4 abgelegten Schlüsselwort zu vergleichen. Wenn die Spracherkennungseinheit 6 eine Übereinstimmung feststellt, kann sie die Türeinheit 1 ansteuern, in ihren Aktivmodus überzugehen. Der Aktivmodus kann sich dadurch auszeichnen, dass in diesem die Türeinheit 1 vorbereitet ist, einen Sprachbefehl zu empfangen, der auf die Auswahl einer Wohnungseinheit 2 durch Nennen eines entsprechenden Identifikators 3 gerichtet ist.

Der Speicher 4 und/oder die Spracherkennungseinheit 6 können Bestandteil der Türeinheit 1 oder auch unabhängig davon realisiert sein, beispielsweise können sie webbasiert realisiert sein, sofern die Anlage beispielsweise eine Schnittstelle zum Internet oder zu einem Gebäudenetzwerk aufweist, die dazu eingerichtet ist, Sprachdaten dorthin zu übertragen und das Ergebnis der Sprachanalyse von dort abzurufen und auszuwerten.

Es kann vorgesehen sein, dass zur Vermeidung einer Fehlaktivierung der Türeinheit 1 das sogenannte Beamforming dazu verwendet wird, um zu erkennen, ob die Person, deren Sprache über das Mikrofon 5 der Türeinheit 1 empfangen wird, sich frontal vor der Türeinheit 1 befindet und/oder ob die Person abgewandt von der Türeinheit 1 spricht. Die Türeinheit 1 kann dazu eingerichtet sein, dass nur dann eine Erkennung des Schlüsselwortes zur Aktivierung der Türeinheit 1 führt, wenn sich die in das Mikrofon 5 sprechende Person frontal vor dem Gerät befindet, oder innerhalb eines begrenzten Winkelbereichs. Damit kann vermieden werden, dass ein zufällig im Detektionsbereich des Mikrofons 5 gesprochenes Schlüsselwort, zum Beispiel durch eine Personengruppe, die vor der Türeinheit 1 steht und eine Unterhaltung führt, ebenfalls zum Einschalten der Türeinheit 1 führt.

Anstelle in dem Speicher 4 kann das Schlüsselwort auf einem Cloud-Server gespeichert sein und die Türeinheit 1 über eine Datenkommunikationsverbindung mit dem Cloud-Server verbunden sein, so dass bei einem von dem Mikrofon 5 empfangenen gesprochenen Worts ein Abgleich des Worts mit dem auf dem Cloud-Server abgelegten Schlüsselwort durchgeführt wird.

Die Türeinheit 1 kann weiterhin dazu eingerichtet sein, nach ihrer Aktivierung über die Anzeige 9 oder per Sprachausgabe über die akustische Ausgabe 8 die vor der Türeinheit 1 stehende Person auffordern, beispielsweise den Namen der zu besuchenden Person oder einen Firmennamen des zu besuchenden Unternehmens oder eine Wohnungseinheitsnummer in das Mikrofon 5 zu sprechen. Der Name, der Firmenname oder die Wohnungseinheitsnummer können in diesem Fall die Identifikatoren 3 zur eindeutigen Zuordnung der Wohnungseinheiten 2 sein. Dazu können beispielsweise alle Wohnungsinhaber, Unternehmen und Wohnungsnummern entweder in dem internen Speicher 4 der Türeinheit 1 oder in einem Cloud-Speicher hinterlegt sein. Nach der Spracheingabe für die Auswahl der Wohnungseinheit 2 wird das gesprochene Wort mit dem Wertevorrat des Speichers 4 beziehungsweise des Cloud-Servers abgeglichen. Bei einer Übereinstimmung mit einem Wert aus dem Wertevorrat wird der Sprachaufbau zwischen der Türeinheit 1 und der entsprechenden Wohnungseinheit 2 initiiert. Dies kann automatisch oder durch gesonderte Freigabe durch einen weiteren Sprachbefehl oder Tastbefehl erfolgen.

Es ist insbesondere denkbar, dass die Türeinheit 1 eine Bedienerführung aufweist, die ausschließlich per Sprachausgabe erfolgt. Der Benutzer kann entsprechend der über die Sprachausgabe bereitgestellten Anweisungen die Türeinheit 1 beispielsweise über die als Touchscreen ausgebildete Anzeige 9 oder mit Hilfe anderer geeigneter manuell bedienbarer Bedienelemente wie Tastensensoren bedienen. Beispielsweise kann eine Sprachausgabe den Befehl umfassen "Bitte wählen Sie auf der Liste den gewünschten Gesprächspartner indem Sie auf seinen Namen tippen. Mit den Pfeiltasten können Sie weitere Einträge sichtbar machen."

Gemäß einer Ausgestaltung kann vorgesehen sein, dass der Verbindungsaufbau mit der Wohnungseinheit 2 erst nach einer erneuten Rückfrage über die Sprachausgabe oder die Anzeige 9 erfolgt. Dies kann beispielsweise dann sinnvoll sein, wenn in dem Gebäude mehrere Unternehmen oder Personen mit gleichen oder ähnlichen Namen ansässig sind. Eine Rückfrage über die Sprachausgabe 8 beziehungsweise die optische Anzeige 9 kann beispielsweise derart erfolgen: "Meinen Sie A. Schmidt oder B. Schmidt?"

Optional kann die Türstation 1 ein akustisches Feedback ausgeben, welches von dem Benutzer getätigte Eingaben, seien es Spracheingaben oder Tasteingaben, positiv oder negativ durch entsprechende akustische Ausgabe quittiert. Beispielsweise kann nach der Überführung der Türeinheit 1 aus dem Standby-Modus in den aktivierten Modus eine Abfrage nach der von dem Benutzer gewünschten Sprache erfolgen.

Obwohl in Figur 1 die Wohnungseinheiten 2 mit einem Hörer dargestellt sind, sind erfindungsgemäß insbesondere Wohnungseinheiten 2 geeignet, die als Freisprecheinheiten ausgebildet sind und somit keinen Hörer aufweisen.

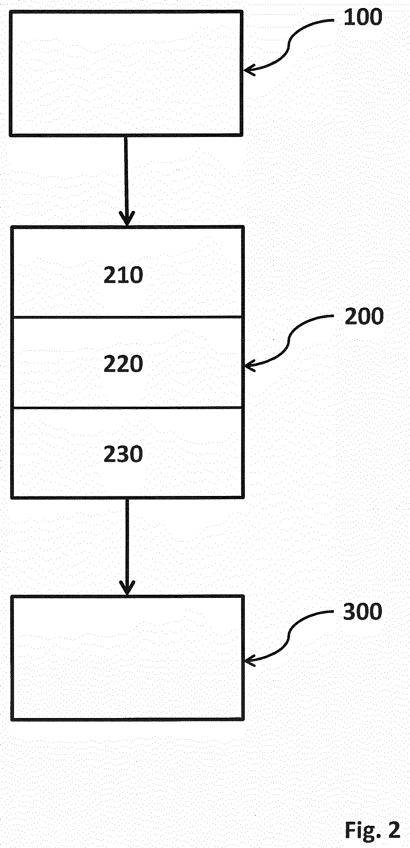

In der Zusammenschau der Figur 1 mit der Figur 2 wird ein beispielhaftes Verfahren für den Verbindungsaufbau beschreiben. In einem Schritt 100 wird von der Türeinheit 1 eine optische und/oder eine akustische Ausgabe bereitgestellt, die eine Instruktion zur Abgabe mindestens eines Sprachbefehls und/oder eine Betriebsanleitung der Gegensprechanlage aufweist. Beispielsweise kann auf der Anzeige 9 die Aufforderung eingeblendet sein, ein Schlüsselwort zur Aktivierung der Türeinheit 1 über das Mikrofon 5 in die Türeinheit 1 einzusprechen. Durch das Einsprechen des Schlüsselwortes in das Mikrofon 5 wird in einem Schritt 200 die Türeinheit 1 aktiviert, so dass die Türeinheit 1 einen aktivierten Zustand einnimmt 210, in welchem sie einen Sprachbefehl für die Auswahl einer der Wohnungseinheiten 2 empfangen kann. Empfängt die Türeinheit 1 einen entsprechenden Sprachbefehl, wird in einem Schritt 300 eine Sprachverbindung zwischen der Türeinheit und einer entsprechenden Wohnungseinheit 2 aufgebaut.

Das Bereitstellen 100 einer optischen und/oder akustischen Ausgabe kann die Aufforderung zur Nennung eines Schlüsselwortes aufweisen, wobei die Türeinheit 1 den aktivierten Zustand für den Aufbau einer Sprachverbindung zwischen der Türeinheit 1 und einer der Wohnungseinheiten 2 infolge des mindestens einen Sprachbefehls nur dann einnimmt, wenn die Türeinheit 1 das Schlüsselwort über ein Mikrofon empfängt.

Die Türeinheit 1 kann nach dem Einnehmen 210 des aktivierten Zustands eine optische oder akustische Ausgabe erzeugen 220, die eine Aufforderungsmitteilung zur Abgabe eines Sprachbefehls aufweist, insbesondere einer Aufforderung zum Auswählen einer der Wohnungseinheiten 2, mit der eine Sprachverbindung hergestellt werden soll.

Nach dem Erzeugen 220 der optischen und akustischen Ausgabe kann das Auswählen 230 der bestimmten Wohnungseinheit 2, mit der eine Sprachverbindung hergestellt werden soll, durch Berühren eines die bestimmte Wohnungseinheit 2 kennzeichnenden Identifikators auf einer Anzeige 9 der Türeinheit 1 oder durch Aussprechen des die bestimmte Wohnungseinheit 2 kennzeichnenden Identifikators erfolgen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

1 Türeinheit
2 Wohnungseinheit
3 Identifikator
4 Speicher
5 Mikrofon
6 Spracherkennungseinheit
7 Vorderseite
8 akustische Ausgabe
9 optische Anzeige
100 Bereitstellen
200 Sprachaktivieren
210 Einnehmen
220 Erzeugen
230 Auswählen
300 Aufbauen

## Patentansprüche

1. Gegensprechanlage für ein Gebäude oder einen Gebäudekomplex aus mehreren Gebäuden, mit einer Türeinheit (1) und einer Mehrzahl Wohnungseinheiten (2), **dadurch gekennzeichnet, dass** die Türeinheit (1) sprachaktivierbar und die Gegensprechanlage dazu eingerichtet ist, in einem aktivierten Zustand der Türeinheit (1) infolge mindestens eines Sprachbefehls oder eines Tastbefehls eine Sprachverbindung zwischen der Türeinheit (1) und einer der Wohnungseinheiten (2) aufzubauen.

2. Gegensprechanlage nach Anspruch 1, bei der die Türeinheit (1) über einen ersten Sprachbefehl aktivierbar und die Gegensprechanalage dazu eingerichtet ist, über mindestens einen zweiten Sprachbefehl, der sich von dem ersten Sprachbefehl unterscheidet, die Sprachverbindung zwischen der Türeinheit (1) und der Wohnungseinheit (2) aufzubauen.

3. Gegensprechanlage nach Anspruch 1, bei der der Sprachbefehl für die Aktivierung der Türeinheit (1) der mindestens eine Sprachbefehl für den Aufbau der Sprachverbindung zwischen der Türeinheit (1) und der Wohnungseinheit (2) ist.

4. Gegensprechanlage nach einem der vorangegangen Ansprüche, bei der der Sprachbefehl für den Aufbau der Sprachverbindung mindestens einen Identifikator (3) eines Gebäudes und/oder einer bestimmten Wohnungseinheit (2) des Gebäudes aufweist, insbesondere eine Gebäudekennung, eine Wohnungsnummer oder den Namen eines Bewohners der Wohnungseinheit (2) oder eines in der Wohnungseinheit (2) ansässigen Unternehmens.

5. Gegensprechanlage nach einem der vorangegangen Ansprüche, die einen Speicher (4), in dem mindestens ein Schlüsselwort hinterlegt ist, und eine Spracherkennungseinheit (6) aufweist, wobei die Türeinheit (1) ein Mikrofon (5) aufweist, wobei die Spracherkennungseinheit (6) dazu eingerichtet ist, einen empfangenen Aktivierungsbefehl auf eine Übereinstimmung mit dem Schlüsselwort zu überprüfen und die Türeinheit (1) nur dann in den aktivierten Zustand zu überführen, wenn die Überprüfung die Übereinstimmung ergeben hat.

6. Gegensprechanlage nach Anspruch 5, bei der das Mikrofon (5) für das Beamforming ausgelegt ist, wobei die Spracherkennungseinheit (6) dazu eingerichtet ist, die Türeinheit (1) nur dann in den aktivierten Zustand zu überführen, wenn der Aktivierungsbefehl bis zu einem bestimmten Maximalabstand zu der Türeinheit (1) und/oder in einem bestimmten Winkelbereich im Verhältnis zu einer Vorderseite (7) der Türeinheit (1) empfangen worden ist.

7. Gegensprechanlage nach einem der vorangegangen Ansprüche, bei der die Türeinheit (1) eine akustische Ausgabe (8) aufweist und dazu eingerichtet ist, über die akustische Ausgabe (8) eine Sprachausgabe bereitzustellen, wobei die Sprachausgabe eine Instruktion zur Abgabe des mindestens einen Sprachbefehls oder Tastbefehls und/oder eine akustische Betriebsanleitung der Gegensprechanlage aufweist.

8. Gegensprechanlage nach Anspruch 7, bei der die Sprachausgabe eine Aufforderung zur Nennung eines Schlüsselworts aufweist, wobei die Türstation dazu eingerichtet ist, den aktivierten Zustand für den Aufbau einer Sprachverbindung zwischen der Türeinheit (1) und einer der Wohnungseinheiten (2) infolge des mindestens einen Sprachbefehls nur dann einzunehmen, wenn die Türeinheit (1) das Schlüsselwort über ein Mikrofon (5) empfängt.

9. Gegensprechanlage nach einem der vorangegangen Ansprüche, bei der die Türeinheit (1) eine sprachaktivierbare optische Anzeige (9), insbesondere ein Display aufweist, wobei in einem aktivierten Zustand der Türeinheit (1) auf der Anzeige ein Verzeichnis der Wohnungseinheiten (2) wiedergegeben ist, wobei auf der Anzeige (9) jeder der Wohnungseinheiten (2) mindestens ein eindeutiger Identifikator (3), beispielsweise ein Name und eine Nummer, zugeordnet ist.

10. Gegensprechanlage nach Anspruch 9, bei der die Türeinheit (1) dazu eingerichtet ist, eine Aufforderung zur Auswahl einer der Wohnungseinheiten (2) durch Nennung des eindeutigen Identifikators (3) über eine optische Anzeige (9) oder eine akustische Ausgabe (8) auszugeben.

11. Verfahren für den Aufbau einer Sprechverbindung zwischen einer Türeinheit (1) und einer bestimmten Wohnungseinheit (2) einer Mehrzahl Wohnungseinheiten (2), wobei das Verfahren die Schritte aufweist:
- Sprachaktivieren (200) einer Türeinheit (1) einer Gegensprechanlage, die weiterhin eine Mehrzahl Wohnungseinheit (2) aufweist, woraufhin die Türeinheit (1) einen aktivierten Zustand einnimmt (210), in welchem sie einen Sprachbefehl für die Auswahl einer der Wohnungseinheiten (2) empfangen kann,
- Aufbauen (300) einer Sprachverbindung zwischen der Türeinheit (1) und einer bestimmten Wohnungseinheit (2) der Mehrzahl Wohnungseinheiten (2) infolge mindestens eines Sprachbefehls.

12. Verfahren nach Anspruch 11, bei dem die Türeinheit (1) vor dem Sprachaktivieren (200) eine optische und/oder akustische Ausgabe (8) bereitstellt (100), die eine Instruktion zur Abgabe des mindestens einen Sprachbefehls und/oder eine Betriebsanleitung der Gegensprechanlage aufweist.

13. Verfahren nach Anspruch 12, bei dem das Bereitstellen (100) einer optischen und/oder akustischen Ausgabe eine Aufforderung zur Nennung eines Schlüsselworts aufweist, wobei die Türeinheit (1) den aktivierten Zustand für den Aufbau einer Sprachverbindung zwischen der Türeinheit (1) und einer der Wohnungseinheiten (2) infolge des mindestens einen Sprachbefehls nur dann einnimmt, wenn die Türeinheit (1) das Schlüsselwort über ein Mikrofon (5) empfängt.

14. Verfahren nach einem der Ansprüche 11 bis 13, bei dem die Türeinheit (1) nach dem Einnehmen (210) des aktivierten Zustands eine optische oder akustische Ausgabe (8) erzeugt (220), die eine Aufforderungsmitteilung zur Abgabe eines Sprachbefehls aufweist, insbesondere eine Aufforderung zum Auswählen einer der Wohnungseinheiten (2), mit der eine Sprachverbindung hergestellt werden soll.

15. Verfahren nach Anspruch 14, bei dem nach dem Erzeugen (220) der optischen oder akustischen Ausgabe (8) das Auswählen (230) der bestimmten Wohnungseinheit (2), mit der eine Sprachverbindung hergestellt werden soll, durch Berühren eines die bestimmte Wohnungseinheit (2) kennzeichnenden Identifikators (3) auf einer Anzeige (9) der Türeinheit (1) oder durch Aussprechen des die bestimmte Wohnungseinheit kennzeichnenden Identifikators (3) erfolgt.
